# EUROPEAN PATENT APPLICATION

(11) **EP 2 335 825 A1**
(43) Date of publication of application: **22.06.2011**
(21) Application number: 09180191.0
(22) Date of filing: 21.12.2009
(51) Int. Cl.: B01L 3/00, G01N 1/28

(54) **Unit and device for the preparation of cells and/or particles in a liquid and method for microscopic analysis**

(71) Applicant: F. Hoffmann-La Roche AG, 4070 Basel (CH)
(72) Inventor: The designation of the inventor has not yet been filed
(74) Representative: Bohest AG

(57) **Abstract**

A unit (10) for the preparation of cells contained in a liquid comprises a storage chamber (20) configured to store the liquid containing the cells and to release the stored liquid via an exit opening (22) upon the application of a predetermined external force, in particular a centrifugal force. A passage (30) adjacently arranged to the exit opening (22) has a cross-section larger than that of the exit opening (22). The wall at the transition from the exit opening (22) to the passage (30) forms an edge (32). The unit further comprises an observation member (50) for receiving the released liquid and an absorbing means (40) arranged adjacent to the observation member (50) between the passage (30) and the observation member (50). The absorbing means (40) has an aperture (42) allowing the released liquid to travel onto the observation member (50), and removes the liquid so as to leave the cells on the observation member (50) for observation.

## Description

The present invention relates to the preparation of adherent or non-adherent cells and/or particles contained in a liquid.

Preparation units are well known in the pharmaceutical industry for observing biological cells, which are contained in a liquid. For example, such preparation units are available under the name "Shandon EZ Single Cytofunnel" from the company Thermo Fisher Scientific Inc., 81 Wyman Street, Waltham, USA. This unit comprises a storage chamber, a filter card and an optical glass slide.

The corresponding filter card is made from a highly absorbent material and has a hole in the center. Usually, the filter card is arranged adjacent to the glass slide, such that the hole of the filter card defines a deposition area on the glass slide. Consequently, the deposition area is circumvented by the highly absorbent material of the filter card.

Initially, the liquid containing the cells is held in the storage chamber separated from the glass slide. After placing the preparation unit into a dedicated centrifuge, for example in the "Shandon Cytospin 4 Cytocentrifuge", and upon spinning the preparation unit with a certain speed, the spinning action tilts the preparation unit, thereby releasing the liquid containing the cells from the storage chamber via the hole in the filter card to the deposition area on the glass slide. Once the liquid containing the cells has reached the deposition area, the liquid is removed by the highly absorbent material of the filter card, leaving the cells on the deposition area of the glass slide. The glass plate then can be separated from the preparation unit and forwarded for microscopic observation of the cells.

Although the above-described centrifuge can process 12 preparation units simultaneously, a more effective and efficient preparation unit and/or preparation device is desirable.

Therefore it is an aim of the present invention to provide a preparation unit, a preparation device and a method for a highly effective, reliable and high-quality preparation of cells and/or particles contained in a liquid.

According to the invention, this task is solved by a preparation unit, a preparation device and a method according to the respective independent claim. Further embodiments of the preparation unit and of the preparation device according to the invention are specified in the dependent claims.

In particular the invention suggests a unit for the preparation of cells and/or particles contained in a liquid, comprising a storage chamber configured to store the liquid containing the cells and/or particles and to release the stored liquid containing the cells and/or particles via an exit opening upon the application of a predetermined external force, in particular a centrifugal force. A passage is arranged adjacently to the exit opening of the storage chamber, with the exit opening of the storage chamber leading into the passage. The passage has a cross-section which is larger than that of the exit opening. At the transition from the exit opening to the passage the wall forms an edge. The unit further comprises an observation member for receiving the released liquid containing the cells and/or particles, and an absorbing means arranged adjacent to the observation member between the passage and the observation member. The absorbing means has an aperture allowing the liquid containing the cells and/or particles to travel through the aperture onto the observation member. The absorbing means further removes the liquid from the liquid containing the cells and/or particles on the observation member so as to leave the cells and/or particles on the observation member for observation. The preparation unit according to the invention is a small and simple unit for a cost-effective, reliable and high-quality preparation of cells, in particular for non-adherent cells, or for other particles originally contained in a liquid.

The liquid is stored in the storage chamber in a hanging state against the gravitational force acting on the liquid without the need to apply any additional external force. This is achieved by adhesion forces and/or surface tension, which can be favorably influenced by a suitable shape of the storage chamber or its exit opening. Thus, the liquid can be reliably held in the storage chamber so that an uncontrolled contact of the liquid with the absorbing means prior to releasing the liquid from the storage chamber is prevented.

In addition, a careful treatment of the cells and/or particles is ensured. Damages during the preparation are reduced or completely avoided resulting in a decreased cell mortality and/or particle deformation. Further, clogging of the cells is avoided thereby providing highly reproducible results over a large number of preparations. This is particularly advantageous if a plurality of preparations units is provided by a multi-well plate, with processing of the various liquids containing the cells or particles being performed in parallel.

In addition, using the preparation unit according to the invention the cells and particles can sediment in the liquid held in the storage chamber under uniform conditions. This sedimentation remains basically undisturbed during the release of the liquid with the cells and particles. Therefore, the resulting cell distribution on the deposition area is very homogeneous. Homogeneous distributions are advantageous as they provide good observation conditions, in particular for automatic image analysis.

By way of example, the units according to the invention can be used for the preparation of cells and/or particles in the pharmaceutical industry.

The retention of the liquid in the storage chamber with the aid of adhesion forces and/or surface tension is enhanced by means of the edge arranged at the exit opening of the storage chamber. Consequently, the liquid can be reliably held in the storage chamber in any orientation of the storage chamber without the application of additional external forces.

A centrifugation process is particularly advantageous for the attachment of non-adherent cells to the observation chamber, because the use of adhesive chemicals can be avoided. Adhesive chemicals bear the risk, that they are potentially altering the induction state of the cells, for instance, by interaction with extracellular matrix proteins.

In a first embodiment of the unit according to the invention, the wall of the edge at the transition between the exit opening and the passage includes an angle of 90 degrees. Such a transition is easy to manufacture. However, other shapes of transitions are also possible for example a staggered shape or an edge including an angle other than 90 degrees.

The angle may be dimensioned to provide a good match between the properties of the liquid and the properties of the material of the wall forming the edge. For example, for a liquid having a high creeping capability the edge may have the shape of a peak, i.e. it may include an angle of less than 90 degrees.

In a further embodiment of the preparation unit according to the invention, the storage chamber comprises a dome-shaped or funnel-shaped portion and a cylindrically-shaped portion adjoining the dome-shaped or funnel-shaped portion. In a further embodiment of the preparation unit according to the invention, the storage chamber is configured to contain a predetermined volume of the liquid containing the cells and/or particles, wherein the predetermined volume is between 1 µl and 1000 µl, particularly between 10 µl and 100 µl, and is especially 50 µl. This is an amount which is typically used in the pharmaceutical industry, where small volumes of liquid preparations are to be processed.

In a further embodiment of the preparation unit according to the invention, the storage chamber comprises a vent opening arranged at that end of the storage chamber opposite the exit opening. This allows for a careful and uniform release of the stored liquid from the storage chamber during centrifugation. The space left by the released liquid fills with gas, e.g. air, through the vent opening. Thus, any adverse effects on the cells or particles contained in the liquid resulting from a non-uniform or careless release of the liquid can be prevented.

Further, for loading the storage chamber the liquid containing the cells and/or particles can advantageously be dispensed into the storage chamber through this vent opening. In particular, this can be achieved by putting the open end of a pipette containing the liquid with the cells and/or particles onto the wall surrounding the vent opening, and then by applying a pressure on the liquid contained in the pipette so as to make the liquid travel through the vent opening towards the storage chamber. As the walls of the storage chamber become wetted by the liquid, the liquid containing the cells and/or particles is sucked into the storage chamber. The preparation unit may be pre-assembled, namely by combining the storage chamber with the absorbing means and/or the observation member, and the storage chamber may then be loaded with the liquid with the aid of a pipetting robot. It should be mentioned, however, that although loading of the storage chamber through the vent opening is preferred, loading of the storage chamber from the opposite end is also possible.

In a further embodiment of the preparation unit according to the invention the observation member is a slide for optical observations. In particular, the slide for optical observations is a transparent slide, e.g. a glass slide such as a microscopic slide, and may be coated or uncoated.

In a further embodiment of the preparation unit according to the invention, the absorbing means comprises a filter paper. Filter paper provides a high absorbing capacity and is comparatively cheap. Of course, absorbing means other than filter paper can be used as well.

In a further embodiment of the preparation unit according to the invention, the portion of the absorbing means surrounding the aperture has a predetermined thickness so as to achieve a predetermined absorbing speed for the liquid. The absorbing speed is a parameter that is to be controlled so as to allow the cells and/or particles to settle on the observation member rather than being dragged away with the liquid that moves towards and into the absorbing means.

The absorbing means may have a step-shape so that it comprises an inner region directly adjacent to the aperture, where the absorbing means is compressed so as to control the absorbing speed, and an outer region around that inner region where the absorbing means is uncompressed and has high absorbing capacity. This enables both, a controlled absorbing speed as well as the removal of a large amount of liquid and further prevents cross-contamination in case of adjacently arranged units.

Preferably, the surface of the absorbing means adjacent to the aperture is flat, plane, even or smooth and without any fibers leaking into the aperture or the area on the observation member where the cells are deposited. This provides for a high reproducibility of the preparation process.

The passage into which the exit opening of the storage chamber leads may be shaped to form a further edge, which upon assembly of the unit presses the absorbing means against the observation member to prevent gaps between the absorbing means and the observation member. This prevents cells and/or particles to escape from the deposit area on the observation member and also prevents cross-contamination between adjacently arranged units.

In a further embodiment of the preparation unit according to the invention, the wall portion of the absorbing means surrounding the aperture is pre-bent towards the observation member, so that upon assembly of the unit this portion is tightly attached to the observation member. With this configuration, gaps between the observation member and the absorbing means are avoided.

The invention further suggests a preparation device comprising a plurality of individual preparation units as described above, wherein the individual units are mutually isolated against cross-contamination. With this device multiple preparations can be performed in parallel, thus enabling an automated high-throughput preparation, observation and/or analysis of the cells and/or particles.

One embodiment of the preparation device according to the invention comprises a 96 well-plate or a 384 well-plate, wherein the storage chambers of the plurality of the individual units are formed by the wells of the 96 well-plate or the 384 well-plate, respectively. This has the advantage that the storage chambers of the individual units are combined in a compact standard well-plate having standardized distances between the wells and having standardized foot-prints so that they can be handled very efficiently by standard equipment for such multi-well plates. For example, it is possible to simultaneously load all storage chambers of the individual wells of such a plate.

In a further embodiment the preparation device according to the invention comprises an observation plate forming the observation members of the individual units. Thus, the observation members of the individual units can be handled jointly to provide an efficient observation through automated image analysis.

In a further embodiment the preparation device according to the invention comprises first and second absorbing sheets forming the absorbing means of the individual units, with the first absorbing sheet being arranged directly adjacent to and in contact with the observation plate, and with the second absorbing sheet being arranged adjacent to and in contact with the first absorbing sheet on the side remote from the observation plate. The second absorbing sheet has an absorption capacity adding to that of the first absorbing sheet (for example, the absorption capacity of the second absorbing sheet can be higher than that of the first absorbing sheet). This has the advantage that the total amount of liquid to be absorbed can be increased and that the mutual isolation of the individual preparation cells is improved, thus reducing the risk of cross-contamination.

In a further embodiment the preparation device according to the invention comprises a spring plate for applying individual compression forces to the individual units so as to achieve a tight attachment of the respective absorbing means to the respective observation member. The compression force firmly presses the absorbing means against the observation member to prevent gaps (see above). Also, the compression compensates for individual variations of the thickness of the first absorbing sheet.

In a further embodiment of the preparation device according to the invention the spring plate comprises a plurality of spiral-shaped springs corresponding to the number of the individual units. Each spiral-shaped spring acts on an individual unit. This results in an individual pressure force being applied to each individual preparation unit, pressing the individual part of the observation plate towards the individual storage chamber with the respective absorbing means being arranged therebetween. The spiral-shaped springs may be cone-shaped, for example.

The invention further involves a method for the preparation of cells (in particular but not exclusively of non-adherent cells) contained in a liquid, comprising the steps of: dispensing a liquid containing the cells into a storage chamber; holding the liquid containing the cells in the storage chamber against its gravitational force only by means of adhesion force and/or surface tension; applying an additional predetermined external force, in particular a centrifugal force, to the liquid containing the cells in order to release the liquid from the storage chamber onto an observation member; removing the liquid from the observation member, leaving the cells on the observation member for observation.

Through the application of the additional predetermined external force, in particular the centrifugal force, the cells are attached to the surface of the observation member. In addition, the cells are flattened through the application of the said force so that structures within the cell much more often come to lie laterally adjacent to each other than on top of each other. This improves the microscopic analysis of the cell structures since a microscopic image essentially is a two-dimensional projection of the three-dimensional cell-structures. This may be of particular relevance for the determination of genotoxic effects a substance to which the cells have been exposed may have on structures or components of the cells, such as on endosomes, mitochondria, nuclei or micro-nuclei.

While after deposition of the cells on the observation member the cells can be dryed and then subjected to microscopic analysis, one embodiment of the preparation method according to the invention further comprises the step of applying onto the observation member having the cells deposited thereon a coating comprising a hydrogel. The hydrogel contains at least one stain which is capable of binding to a dedicated component of the cells. The stain bound to the dedicated component of the cells is fluorescent upon being excited with light of a predetermined wavelength, while it is not fluorescent as long as it is not bound to such dedicated cell component.

By way of example, the hydrogel may be an agarose hydrogel that keeps the cells deposited on the observation member in a wet state. A hydrogel can be advantageous with respect to maintaining the morphology of the cells deposited on the observation member (e.g. a microscope slide) or on the afore-mentioned observation plate. A hydrogel such as the afore-mentioned agarose hydrogel - at room temperature - is in a state similar to gelatine, that is to say it is essentially solid. It protects the cells from drying out as well as from getting polluted. However, small molecules like the molecules of the stain, are substantially freely movable in the hydrogel and diffuse through the hydrogel and into the cells where they bind to dedicated cell components, such as for example nuclei, micro-nuclei, other dedicated components of the cell, or to the cell boundary.

This embodiment is advantageous since in contrast to applying the stain to the cells deposited on the observation member, washing away from the observation member any excess stain that has not diffused into the cells prior to placing the observation member with the stained cells under a microscope for microscopic analysis, the step of washing away can be completely omitted, since the stain is already contained in the hydrogel and diffuses into the cells without the need to wash away any excess stain.

Therefore, another aspect of the present invention is related to a method for microscopic analysis of cells, comprising the steps of
- preparing the cells using the afore-mentioned preparation method according to the invention,
- illuminating the cells with light of a predetermined wavelength
- placing the prepared cells under a microscope and
- analyzing the microscopic image.

Only the stains that have diffused into the cell and that have bound to the dedicated components of the cell exhibit fluorescence after having been illuminated with light of a predetermined wavelength. For example, the stain may be adapted to bind to nuclei and to potential micro-nuclei of the cells. Thus, the formation of micro-nuclei can be determined which may be an indication that a particular substance to which the cells have been exposed prior to microscopic analysis may be genotoxic.

In case an additional stain has been provided and diffused into the cells and has bound to the cell boundaries, and after the cells have been illuminated with light of a further predetermined wavelength the additional stain also exhibits fluorescence so that both the boundaries of the cells as well as any dedicated structures within the cells are clearly visible, thus further enhancing the contrast of the microscopic image.

The invention is described in more detail hereinafter by way of exemplary embodiments and with reference to the attached drawings. It is shown in:
- Fig. 1: a cross-sectional view of an embodiment of an individual preparation unit according to the invention;
- Fig. 2: an exploded perspective view of an embodiment of a preparation device according to the invention;
- Fig. 3: a side view of the preparation device of Fig. 2;
- Fig. 4: a cross-sectional view along line IV-IV of Fig. 3;
- Fig. 5: an enlarged view of detail V of Fig. 4;
- Fig. 6: an enlarged view of detail VI of Fig. 4;
- Fig. 7: an enlarged view of detail VII of Fig. 2;
- Fig. 8: a side view of the preparation device of Fig. 2 in the assembled state;
- Fig. 9: a cross-sectional view along line IX-IX of Fig. 8;
- Fig. 10: an enlarged view of detail X of Fig. 9;
- Fig. 11: a perspective view of the preparation device of Fig. 2 in the assembled state,
- Fig. 12: a detail of an observation plate of the device of Fig. 2 with cells deposited thereon, covered with a hydrogel containing stains,
- Fig. 13: example images of non-adherent cells prepared in with the device and method according to the invention, and
- Fig. 14: examples of analysis results of a micronucleus test performed using the device and method according to the invention.

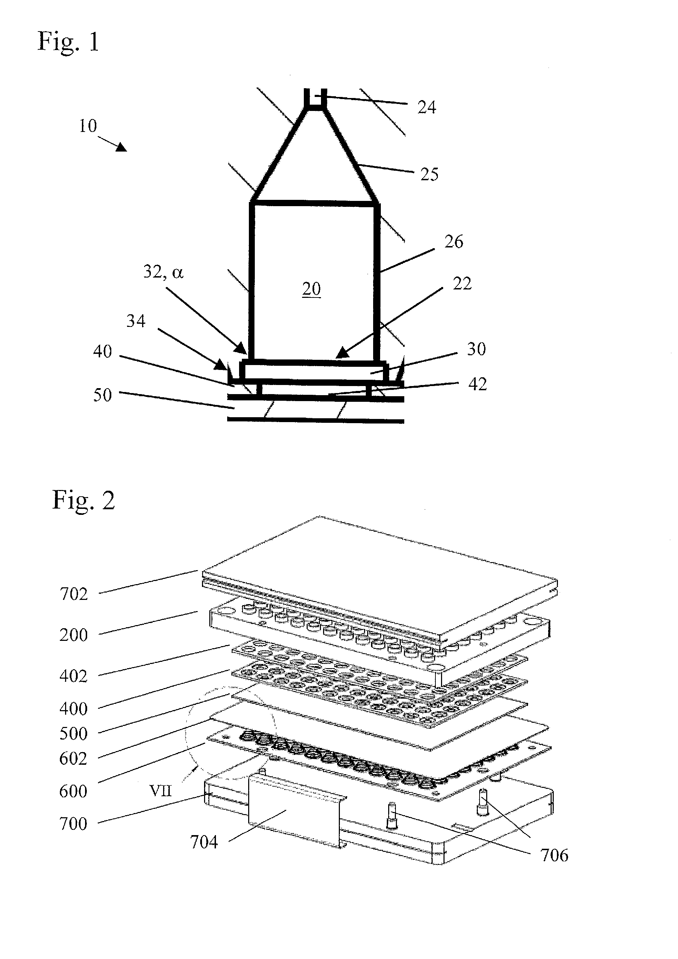

**Fig. 1** shows a cross-sectional view on an embodiment of an individual preparation unit 10 for the preparation of cells and/or particles contained in a liquid according to the invention.

The preparation unit 10 comprises a storage chamber 20 for storing a cell suspension. Storage chamber 20 comprises a dome-shaped or funnel-shaped portion 25 and a cylindrically-shaped portion 26 adjoining the dome-shaped portion 25. Storage chamber 20 may be configured to contain a predetermined volume of the cell suspension, which is generally between 1 µl and 1000 µl, in particular between 10 µl and 100 µl, and is especially 50 µl. At the end remote from the dome-shaped portion 25 the storage chamber 20 comprises an exit opening 22. Storage chamber 20 further comprises a vent opening 24 that leads into the dome-shaped portion 25.

A cylindrically-shaped passage 30 is arranged adjacently to the exit opening 22 of storage chamber 20. The passage 30 has a cross-section which is larger than the cross-section of the exit opening 22. In particular, the passage 30 is coaxially aligned with the exit opening 22 of the storage chamber 20. At the transition from the exit opening 22 to the passage 30 the wall forms an edge 32. In this embodiment, the edge 32 includes an angle α of 90 degrees.

An absorbing means 40 embodied as filter paper 40 is arranged adjacently to the passage 30, on the side remote to the exit opening 22 of the storage chamber 20. The filter paper 40 can be a plotting paper or a chromatography paper, in particular a Grade 17 Chr paper available from the company Whatman Ltd, Brentford, London, United Kingdom. The filter paper 40 has an aperture 42. The aperture 42 is coaxially aligned with cylindrically-shaped passage 30.

An observation member 50 embodied as a glass slide 50 is arranged adjacently to the filter paper 40 such that the filter paper 40 is arranged between the passage 30 and the glass slide 50. Further, the passage of the preparation units 10 is shaped to form a further edge 34, which is arranged adjacently to the filter paper 40. Edge 34 presses the filter paper 40 towards the glass slide 50 to prevent gaps between the filter paper 40 and the glass slide 50.

Portions 25 and 26 form an inner hollow space of the storage chamber 20 for storing the cell suspension that comprises the liquid and the cells contained in the liquid as long as no external forces other than the gravitational force are applied. In this respect, edge 32 in connection with adhesion forces and/or surface tension helps to retain the cell suspension in storage chamber 20 against the gravitational force. Upon the application of a predetermined centrifugal force, however, the cell suspension is released from storage chamber through exit opening 22. Air may then flow through vent opening 24 into storage chamber 20, thus filling the empty space which is left behind by the released cell suspension. Vent opening 24 can also be used to fill the cell suspension into storage chamber 20 by putting the ends of a pipette on the wall around vent opening 24, applying a predetermined pressure on the cell suspension in the pipette (e.g. by squeezing the pipette), so that the cell suspension is drawn through vent opening 24 into the widening dome-shaped portion and then into cylindrical portion 26 of storage chamber 20.

Passage 30 and aperture 42 allow the cell suspension, which has been released from the storage chamber 20, to travel from storage chamber 20 to glass slide 50. Glass slide 50 serves to receive the released cell suspension through aperture 42. Aperture 42 of filter paper 40 is configured to contact the received cell suspension so as to remove the liquid from the cell suspension and to leave the cells deposited on glass slide 50. The absorbing speed of the liquid can be controlled by the height of the portion of filter paper 40 surrounding aperture 42. Once the liquid has been absorbed and the cells have been deposited on glass slide 50, glass slide 50 can be transported to an imaging device, e.g. a microscope or a plate reader.

**Fig. 2** shows an exploded perspective view of an embodiment of the preparation device according to the invention. This preparation device comprises a stack of different plates and sheets, namely in the following order from the bottom to the top: a base plate 700, a spring plate 600, an intermediate plate 602, an observation plate 500 (e.g. a glass plate), a first absorbing sheet 400 (e.g. a first filter sheet), a second absorbing sheet 402 (e.g. a second filter sheet), a well-plate 200 (e.g. a funnel plate) and a cover plate 702.

The preparation device comprises 96 individual units 10 (see Fig. 1). Well plate 200 comprises the storage chambers 20 and the passages 30, the first absorbing sheet 400 comprises the absorbing means 40, and observation plate 500 comprises the observation members 50.

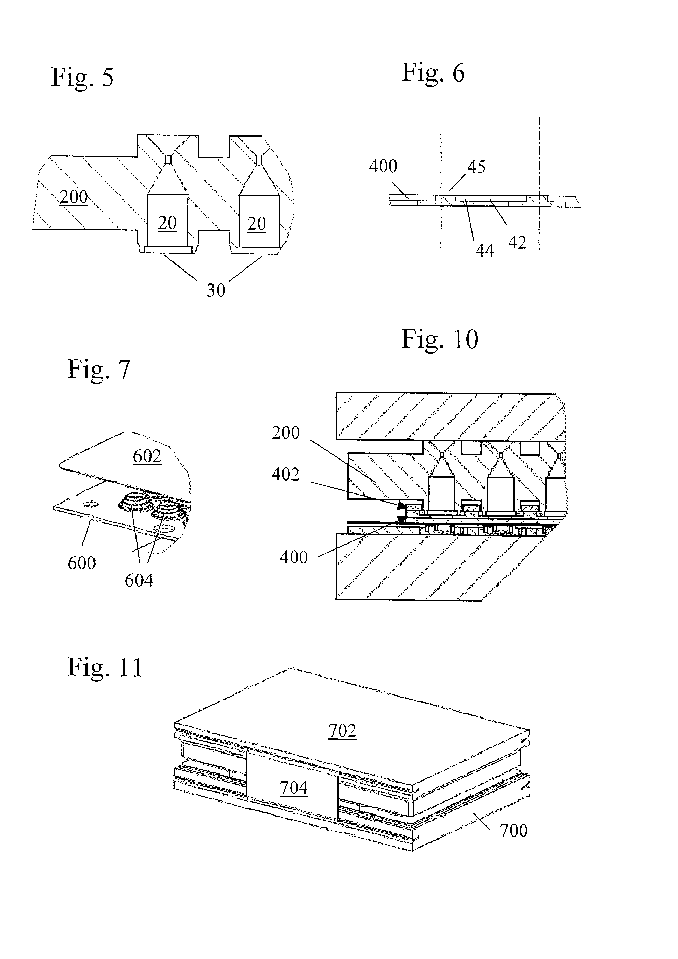

The intermediate plate 602 serves to compensate different pressure forces exerted by the individual springs of the spring-plate 600 on the individual preparation units 10. Further, the intermediate plate 602 prevents scratching of the observation plate 500 by the springs 604 of the spring plate 600 (see also detail VII in Fig. 7).

Base plate 700 comprises a plurality of pegs 706, which help to bring the stack of plates in proper alignment during assembly. These pegs 706 engage with corresponding holes in spring plate 600 and in well-plate 200. Further, a clamp 704 is shown, which is suitable to hold the assembled and compressed stack together as a compact preparation device. To this end, the clamp 704 is U-shaped, wherein the two bent edges are configured to engage into grooves which are present in the side walls of base plate 700 and cover plate 702.

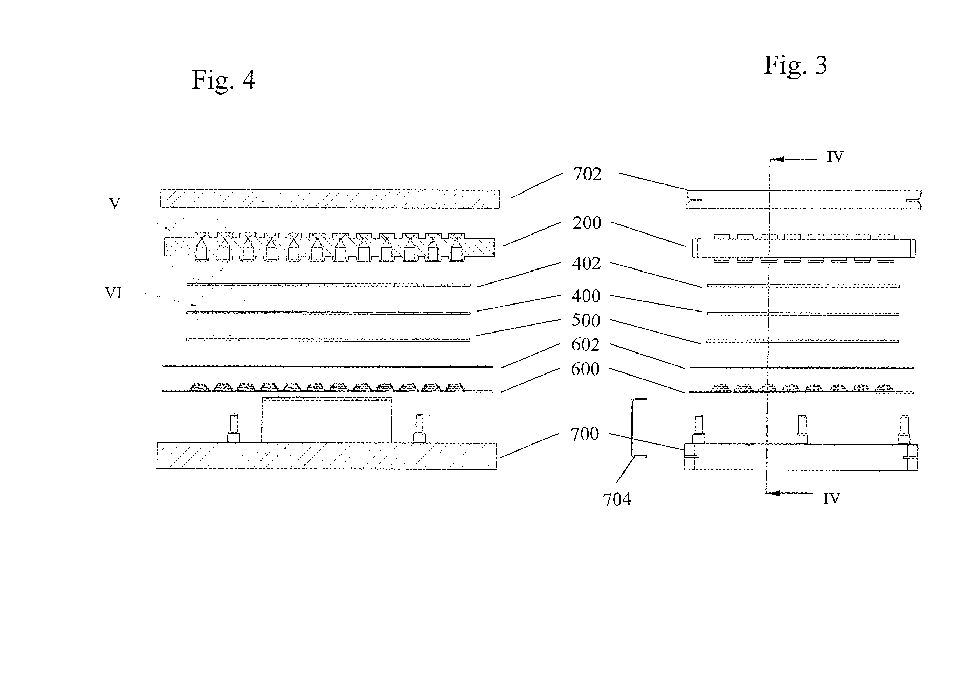

**Fig. 3** shows a side view of the preparation device of Figure 2 and **Fig. 4** shows a cross-sectional view along line IV-IV of Fig. 3, referring to the same reference numbers. Detail V showing a part of the well plate 200 is shown enlarged in **Fig. 5** and detail VI showing a part of the first absorbing sheet 400 is shown enlarged in **Fig. 6**. These parts are described in more detail below.

Fig. 5 shows an enlarged view of detail V of the well-plate 200 of Fig. 3. Detail V shows a portion of two of the 96 individual preparation units of the well-plate 200. Each portion of the individual units comprises a storage chamber 20 and the passage 30 for individually storing and releasing the individual cell suspensions.

Fig. 6 shows an enlarged view of detail VI of the first absorbing sheet 400 of Fig. 3. This detail shows one complete unit of the 96 individual units of the absorbing sheet 400 comprising aperture 42 surrounded by the absorbing sheet 400.

Absorbing sheet 400 has a step-shaped cross-section in an area surrounding the aperture 42 with an inner region 44 surrounding aperture 42 and having a smaller thickness, and with an outer region 45 surrounding inner region 44 and having a thickness greater than that of inner region 44. The smaller thickness of the inner region 44 can be obtained by compressing absorbing sheet 400. By means of this compression the absorbing speed of the liquid can be adjusted to a desired speed. The outer region 45 remains uncompressed to exhibit a high absorbing capacity for the liquid to be removed.

**Fig. 7** shows an enlarged view of a detail of the spring plate 600 of Fig. 2 with two spiral-shaped springs 604. The spiral-shaped springs 604 are arranged between the spring plate 600 and the intermediate plate 602. Each spiral-shaped spring 604 acts on an individual unit 10 (see Fig. 1). Therefore, the force of each spring 604 applies an individual pressure force on the corresponding area of the intermediate plate 602, which in turn applies a pressure force on the corresponding area of observation plate 500, which is pressed towards well-plate 200 comprising the individual storage chambers 20.

The spiral-shaped springs 604 may be cone-shaped, with a spring winding having a large diameter being adjacently arranged to the spring plate 600 and with the diameters of the windings decreasing in the direction towards the intermediate plate 602.

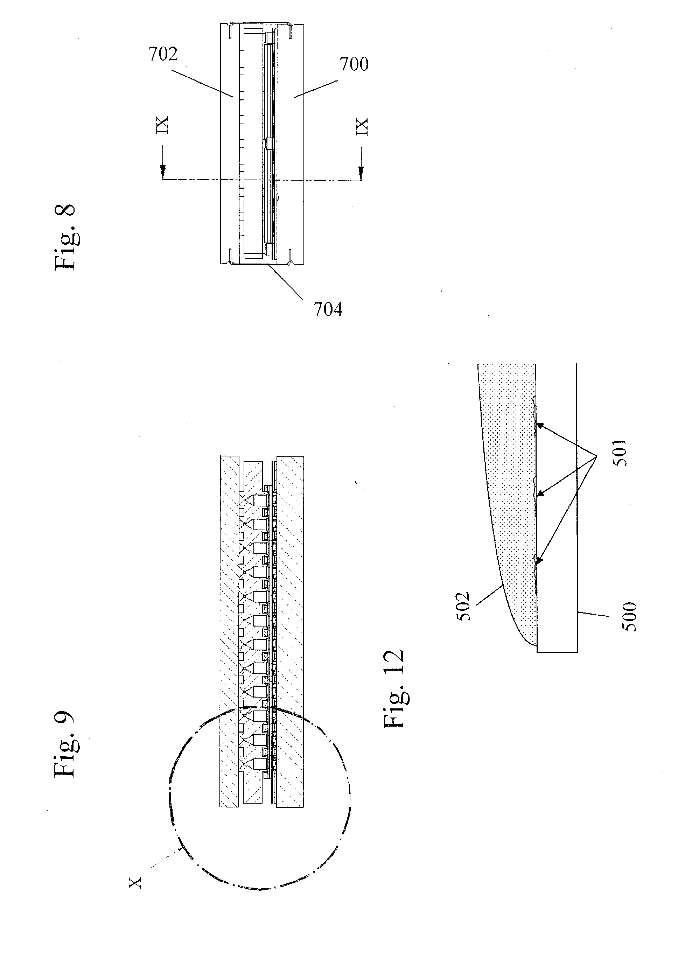

**Fig. 8** shows a side view of the preparation device of Fig. 2 in the assembled state, and **Fig. 9** shows a cross-sectional view along line IX-IX of Fig. 8. The two clamps 704 (only one being shown) are holding the assembled and compressed stack of plates and sheets together as a compact preparation device. This is achieved with the aid of the two bent edges of each clamp 704, which engage into grooves in the side walls of the base plate 700 and the cover plate 702. Detail X of the preparation device is shown in **Fig. 10** and further described in more detail below.

Fig. 10 shows an enlarged view of detail X of the preparation device of Fig. 9, and in particular this detail shows two completely assembled preparation units 10. The second absorbing sheet 402 is arranged adjacent to and in contact with the first absorbing sheet 400 on the side remote from observation plate 500. The second absorbing sheet 402 has a absorbing capacity higher than that of the first absorbing sheet 400. This increases the total amount of liquid which can be absorbed by the absorbing sheets, and helps to improve the mutual isolation of the individual preparation cells thus reducing the risk of cross-contamination.

**Fig. 11** shows a perspective view of the preparation device according to Fig. 2 in an assembled state, the stack including the base plate 700 and the cover plate 702 clamped together with two clamps 704 (only one clamp being shown). In the assembled state the preparation device is very compact and robust and can easily be placed into a centrifuge. In this embodiment the preparation device has a standard footprint. Therefore, it can be placed without any modifications into a conventional centrifuge, e.g. the "Shandon Cytospin 4 Cytocentrifuge".

The preparation device according to Figures 2 to 11 comprises a plurality of individual units 10 being mutually isolated against cross-contamination and is therefore suitable for multiple preparations being performed in parallel. Well-plate 200 provides the storage chambers 20 and the passages 30 of the individual units 10 in a compact manner having standardized distances between the wells and having standardized foot-prints. Observation plate 500 provides observation members 50 of the individual units 10 so that the observation members 50 can be handled jointly to provide an efficient observation through automated image analysis. First absorbing sheet 400 serves as primary means for removing the liquid from the observation plate 500, however, with a controlled absorbing speed so as to prevent cells from being dragged away together with the liquid during absorption. Second absorbing sheet 402 serves to assist first absorbing sheet 400 in removing the liquid, and for improving the mutual isolation of the individual preparation units.

Intermediate plate 602 serves for uniformly distributing the individual compression forces applied by the springs 604 of spring plate 600 and prevents scratching of the observation plate 500 by the springs 604. Spring plate 600 serves for applying a compression force to the stack of plates and sheets, which is held together in a compact and robust manner with the aid of base plate 700, cover plate 702, and clamps 704. Pegs 706 serves for proper alignment of the stack of plates during assembly. In case it is desirable to increase the compression force, an additional spacer plate may be inserted with the rest of the stack remaining unchanged (thus increasing the compression of the springs of spring plate 600). The entire assembled preparation device may be placed into a standard centrifuge, so that a plurality of cell preparations can be performed simultaneously.

As has been mentioned above, it may be advantageous to apply a hydrogel containing one or more stains to the cells deposited on the observation member or on the observation plate, respectively. The hydrogel may contain at least one stain, which is capable of binding to a dedicated component of the cells. For example, the hydrogel is an agarose hydrogel and contains two stains, one being adapted to bind to dedicated components or structures of the cell, e.g. to nuclei or micro-nuclei, and the other stain being adapted to bind to the cell boundaries. When bound to the dedicated components or structures, or to the cell boundaries, respectively, the respective stain is fluorescent upon being excited with light of a respective predetermined wavelength, while it is not fluorescent as long as it is not bound to such dedicated cell component, structure or boundary.

The agarose hydrogel keeps the cells deposited on the observation member in a wet state which can be advantageous with respect to maintaining the morphology of the cells deposited on the observation member or on the observation plate. A hydrogel such as the afore-mentioned agarose hydrogel - at room temperature - is in a state similar to gelatine, that is to say it is essentially solid. It protects the cells from drying out as well as from getting polluted. However, small molecules like the molecules of the stain, are substantially freely movable in the hydrogel and diffuse through the hydrogel and into the cells where they bind to dedicated cell components, such as for example nuclei, micronuclei, other dedicated components of the cell, or to the cell boundary.

A detail of an observation plate 500 with cells 501 deposited thereon and covered with a hydrogel 502 containing the stains is schematically shown in Fig. 12. The so prepared observation plate 500 can be stored for a predetermined time so as to allow the stains to diffuse into the cells 501 and to bind to the nuclei and potential micro-nuclei and to the cell boundaries respectively. Subsequently, the cells may be subjected to microscopic analysis yielding a high contrast microscopic image of the cells and cells structures.

A more detailed example of the method will be described in the following:
Cell culture
   Mouse lymphoma cells of the type "L5178Ytk^{+/-}" are grown in suspension in T-175 flasks in RPMI 1640 medium containing 10% horse inactivated serum, 2 mM L-glutamine, and 1% pen/strep antibiotics to 75% confluency and 95% viability (all media available from Life Technologies Corporation, Carlsbad, California, USA).
Compound incubation
   Compound incubation is done in 96 well plates of the type "Falcon 353077" available from Beckton Dickinson, New Jersey, USA, for 24 hours at 37°C, 5% CO₂ with 8000 cells in 60 µl growing medium. Compounds are dissolved in dimethyl sulfoxide DMSO (occasionally in water), at a final DMSO concentration of 1%. As a positive control, 15 µg/ml methylmethanesulfonate (MMS) was used.
Cell centrifugation & fixation
   Of the cell suspension, 50 µl are transferred from the incubation plate into the chambers of an inverted funnel plate (see chambers 20 of well plate 200 shown in Fig. 4 and Fig. 5) using a 96-head of an automated pipetor of the type "CyBi-well" available from the company CyBio AG, Jena, Germany, after mixing five times using 250 µl pipette tips.

The cell preparation device is assembled essentially as shown in Fig. 2. A spring plate 600 comprising of 96 spiral springs of equal strength is placed on top of the base plate 700 of the frame and covered with a thin and flexible metal intermediate plate 602 for protection. Next in the stacked assembly, a dedicated glass plate 500 is serving as the observation plate to receive the cells. This plate may be a "Nexterion" glass plate available from Schott Technical Glass Solutions GmbH, Jena, Germany. Two perforated filter paper plates 400 and 402 are used, each having 96 holes at SBS-standard spacing (SBS = Society for Biomolecular Science). The first filter plate 400, which is in contact with the glass plate 500, is to form the boundaries of each of the 96 sample spots and to remove the medium from the suspension during centrifugation (3.5 mm diameter holes). In order to achieve a homogeneous and isotropic liquid removal with a defined speed, the filter material was pressed in the shape of a ring around each well to a thickness of 0.5 mm.

The second filter plate 402, which is lying on top of the first filter plate 400 in loose contact, is to increase the retention capacity of the first filter plate 400 and comprises larger holes (7.0 mm diameter) for a better fit around the edges 32 of the inverted funnel plate 200.

The funnel plate 200 filled with cell suspension is carefully placed on top of the first filter plate 400 and fitting into the holes of the second filter plate 402. The assembly is finished by the cover plate of the preparation device. Precompressed by a manual lever press, the preparation device is fixed using two metal brackets 704 from the side that take virtually no space, such that the whole device fits into the micro-titer plate bucket of a commercial centrifuge, e.g. of the type "Multifuge 1S" available from the company Heraeus, Germany. This particular centrifuge accelerates immediately to the set centrifugation speed of 1000RPM, which is maintained for 5 minutes. After disassembly of the preparation device, the plates are drying in ambient air for 1 min, then immersed in 70% ethanol/water over night for fixation and up to a week for storage.

### Staining and mounting

After fixation, the glass plates were dried for 1 minute with the excess liquid shaken off and immersed in phosphate buffered saline (PBS) for 5 minutes as a preconditioning. The bottom side of the plates opposite to the surface were the cells have been deposited on was quickly rinsed with double distilled water (ddH₂O) and, then the plates were ready for mounting.

In order to keep the cells in a wet state and to prevent undesired change of cell morphology and staining artifacts, it proved to be advantageous to cover the cells with agarose hydrogel. To this end, "low-melting point low gelling temperature agarose type VII" available from Sigma-Aldrich Corporation, Missouri, USA, was dissolved to a final 2% weight/volume solution in PBS in a micro wave oven at 850 W. It takes several minutes and several boiling and mixing cycles before the powder is completely dissolved.

Staining of the nuclei of the cells with the stain of the type "Hoechst" (1 µM (H₂O)) available from Sigma Aldrich Corporation, Missouri, USA, and of the cytoplasm of the cells with the stain of the type "cell mask red" (1 µg/ml (PBS)) available from Life Technologies Corporation, Carlsbad, California, USA) can be done in the agarose gel without the need for any additional washing step. This is due to the fact that the stain Hoechst is practically non-fluorescent in solution and only fluorescent when bound to DNA and the fact that image acquisition is done by confocal excitation and detection, thus reducing out-of-focus background tremendously. The liquid agarose solution containing the stains is kept at 50°C and poured over the plates using a 25 ml disposable pipette. The solution will stay on the plate and not spill over the edges due to surface tension. After 20-30 min the gel is hardened and the plates can be mounted in dedicated lidded frames for the glass "Nexterion" available from the same company as is the glass.

### Imaging

Spinning-disc confocal fluorescence microscopy of glass plates carrying 96 features has been performed on the high-throughput automated imaging system "Opera QEHS" available from the company PerkinElmer Cellular Technologies, Hamburg, Germany. The nuclear stain (Hoechst), and the cytoplasmic stain (cell mask red) were excited by solid state lasers at 405 nm and 635 nm, respectively.

The excitation intensity and duration of the illumination sources was adjusted in each experiment to account for differences in labeling efficiencies, to optimize brightness and contrast, and to minimize bleaching (typically, 50 mW laser output, 200-2000 ms integration time).

At each spot, typically 25 pairs of scanning images were recorded through a LCPLF 20x NA 0.4 air objective lens (available from the company Olympus, Japan) and optimized filter sets by 2 independent high quantum-efficiency 12 bit CCD cameras (1.3 mega pixels monochrome). Any residual illumination heterogeneity, image shift or distortion was corrected for by using separately acquired images from calibration samples.

### Image analysis

Confocal micrographs were analyzed using the proprietary software environment "Acapella 2.0" of PerkinElmer's "Opera" imaging system, both available from PerkinElmer Cellular Technologies, Hamburg, Germany. First, the location of each cell was identified by segmentation of the nuclear stain image. Once the nuclei have been localized and their outline and area has been measured, the outline of the cell was determined by segmentation of the cytoplasmic stain.

In addition, images of micro nuclei-containing samples were analyzed by means of the image analysis software "eCognition" available from the company Definiens AG, Munich, Germany.

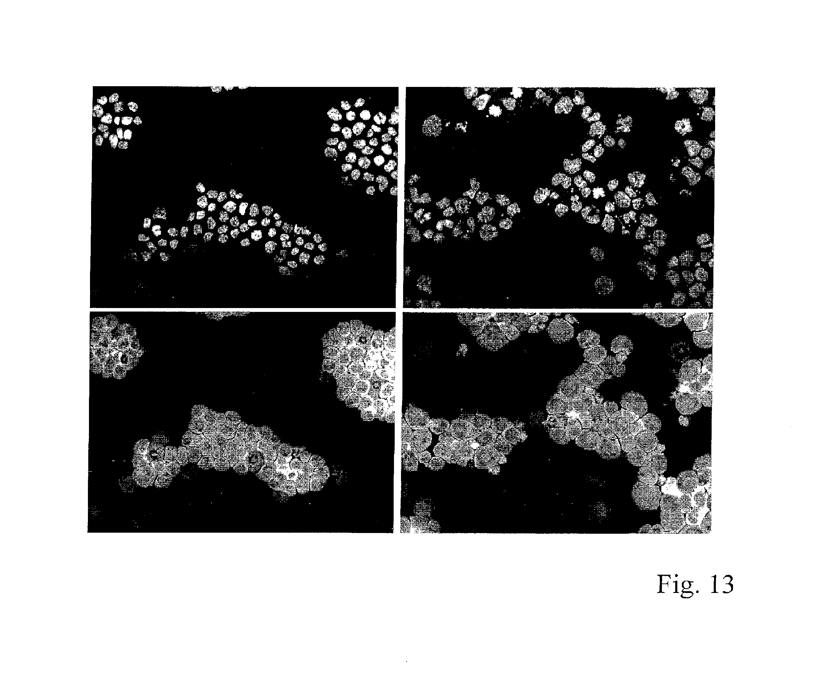

**Fig. 13** shows example images of non-adherent cells prepared with the described device and method. In the images of the upper row the cells have been stained with the stain "Hoechst" mentioned above, while in the lower row the cells have been stained with the stain "cell mask red" also mentioned above. In the left column the cells are have not been treated while in the right column the cells have been treated with a genotoxic compound. As can be seen, the cells prepared with the described device and method stick well to the untreated glass surface, are spread out flat so that intracellular structures are well separated.

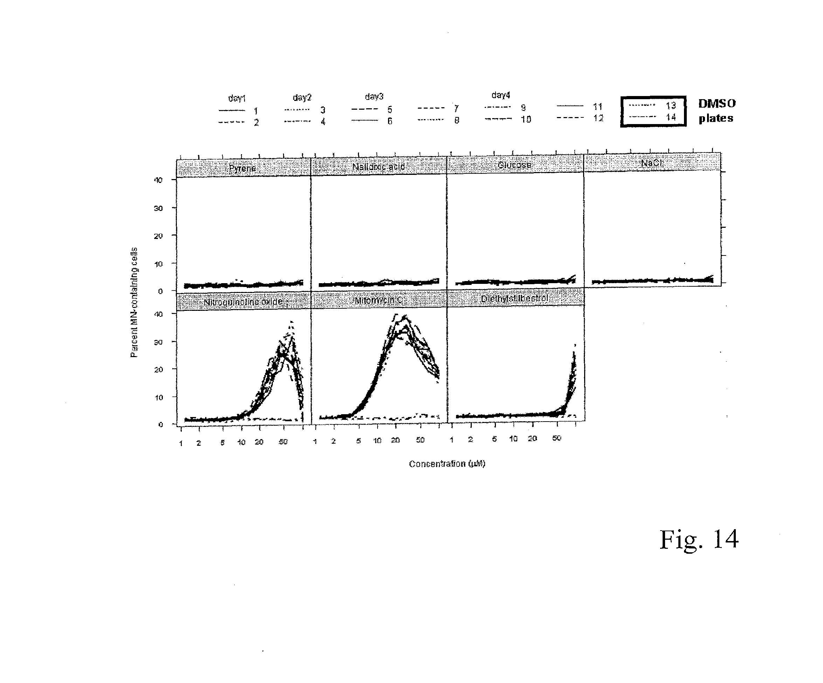

**Fig. 14** shows examples of analysis results of a micronucleus test performed using the device and method described. The experiments have been performed in replicates on four different days, as indicated the legend above the graphs. The proportion of micronuclei-containing cells to all cells is plotted versus the substance concentration, as is indicated in the graphs. The upper row contains substances that are known to be non-genotoxic, while the lower row contains substances that are known to be genotoxic. From the graphs it can be seen that all three substances have been correctly classified. Plates #13 and #14 were treated only with DMSO (dimethyl sulfoxide) without any toxic substance as a negative control, and this can be particularly seen in the graphs shown in the lower row. The cells have been diluted to 12 dilutions of the indicated substances. The concentration range id defined by the maximum concentration (10 µM for Nitroquinoline oxide and Mitomycin C, 100 µM for all other substances), the dilution factor 1.5, and the number of dilutions. Cells containing no micronucleus and cells containing one to three micronuclei have been counted using a custom made image processing algorithm. In the graph, the data for Nitroquinoline oxide and Mitomycin C have been shifted to the right by the factor of ten solely for displaying purposes.

## Claims

1. Unit (10) for the preparation of cells and/or particles contained in a liquid, comprising
- a storage chamber (20) configured to store the liquid containing the cells and/or particles and to release the stored liquid containing the cells and/or particles via an exit opening (22) upon the application of a predetermined external force, in particular a centrifugal force,
- a passage (30) adjacently arranged to the exit opening (22) of the storage chamber (20), with the exit opening (22) of the storage chamber (20) leading into the passage,
wherein the passage (30) has a cross-section larger than that of the exit opening (22) and wherein the wall at the transition from the exit opening (22) to the passage (30) forms an edge (32),
- an observation member (50) for receiving the released liquid containing the cells and/or particles, and
- an absorbing means (40) arranged adjacent to the observation member (50) between the passage (30) and the observation member (50),
the absorbing means (40) having an aperture (42) allowing the liquid containing the cells and/or particles to travel through the aperture (42) onto the observation member (50),
the absorbing means (40) further removing the liquid from the liquid containing the cells and/or particles on the observation member (50) so as to leave the cells and/or particles on the observation member (50) for observation.

2. Unit (10) according to claim 1, wherein the wall of the edge (32) at the transition between exit opening (22) and the passage (30) includes an angle (α) of 90 degrees.

3. Unit (10) according to claim 1 or 2, wherein the storage chamber (20) comprises a dome-shaped or funnel-shaped portion (25) and a cylindrically-shaped portion (26) adjoining the dome-shaped or funnel-shaped portion.

4. Unit (10) according to any one of the preceding claims, wherein the storage chamber (20) is configured to contain a predetermined volume of the liquid containing the cells and/or particles, wherein the predetermined volume is between 1 µl and 1000 µl, particularly between 10 µl and 100 µl, and is especially 50 µl.

5. Unit (10) according to any one of the preceding claims, wherein the storage chamber (20) comprises a vent opening (24) arranged at that end of the storage chamber (20) opposite the exit opening (22).

6. Unit (10) according to any one of the preceding claims, wherein the observation member (50) is a slide for optical observations.

7. Unit (10) according to any one of the preceding claims, wherein the portion of the absorbing means (40) surrounding the aperture (42) has a predetermined thickness so as to achieve a predetermined absorbing speed for the liquid.

8. Unit (10) according to claim 7, wherein the wall portion of the absorbing means (40) which surrounds the aperture (42) is pre-bent towards the observation member (50), so that upon assembly of the unit (10) this pre-bent portion is tightly attached to the observation member (50).

9. Preparation device comprising a plurality of individual units (10) according to any one of claims 1 to 8, wherein the individual units (10) are mutually isolated against cross-contamination.

10. Preparation device according to claim 9, comprising a 96 well-plate (200) or a 384 well-plate, wherein the storage chambers (20) of the plurality of the individual units (10) are formed by the wells of the 96 well-plate or the 384 well-plate, respectively.

11. Preparation device according to claim 9 or 10, further comprising an observation plate (500) forming the observation members (50) of the individual units (10).

12. Preparation device according to claim 11, further comprising first (400) and second (402) absorbing sheets forming the absorbing means (40) of the individual units (10), with the first absorbing sheet (400) being arranged directly adjacent to and in contact with the observation plate (500), and with the second absorbing sheet (402) being arranged adjacent to and in contact with the first absorbing sheet (400) on the side remote from the observation plate (500), with the second absorbing sheet (402) having an absorption capacity adding to that of the first absorbing sheet (400).

13. Preparation device according to any one of claims 9 to 12, further comprising a spring plate (600) for applying individual compression forces to the individual units (10) so as to achieve a tight attachment of the respective absorbing means (40) to the respective observation member (50).

14. Preparation device according to claim 13, wherein the spring plate (600) comprises a plurality of spiral-shaped springs (604) corresponding to the number of the individual units (10), with each spiral-shaped spring (604) acting on an individual unit (10).

15. Method for the preparation of cells contained in a liquid, comprising the steps of:
- dispensing a liquid containing the non-adherent cells into a storage chamber (20);
- holding the liquid containing the non-adherent cells in the storage chamber (20) against its gravitational force only by means of adhesion forces and/or surface tension;
- applying an additional predetermined external force, in particular a centrifugal force, to the liquid containing the non-adherent cells in order to release the liquid from the storage chamber (20) onto an observation member (50);
- removing the liquid from the observation member (50), leaving the non-adherent cells on the observation member (50) for observation.

16. Method according to claim 15, further comprising the step of applying onto the observation member(50) having the cells deposited thereon a coating comprising a hydrogel, said hydrogel containing at least one stain which is capable of binding to a dedicated component of the cell and which is fluorescent upon being excited with light of a predetermined wavelength.

17. Method for microscopic analysis of cells, comprising the steps of
- preparing the cells using the method of claim 15 or claim 16,
- placing the prepared cells under a microscope and
- analyzing the microscopic image.
